Europäisches Patentamt

European Patent Office    (11) Numéro de publication:    **0 219 418**

Office européen des brevets    **A1**

## (12) DEMANDE DE BREVET EUROPEEN

(21) Numéro de dépôt: 86402177.9

(22) Date de dépôt: 02.10.86

(51) Int. Cl.⁴: **F 16 L 33/00**
**F 16 L 33/22, F 16 L 37/10,**
**F 16 L 37/12**

(30) Priorité: 08.10.85 FR 8514887

(43) Date de publication de la demande:
**22.04.87 Bulletin 87/17**

(84) Etats contractants désignés: **DE ES GB IT**

(71) Demandeur: **VALEO**
**64, avenue de la Grande Armée**
**F-75848 Paris Cédex 17 (FR)**

(72) Inventeur: **Potier, Michel**
**9, square des Carrières**
**F-78120 Rambouillet (FR)**

(74) Mandataire: **Netter, André et al**
**Cabinet NETTER 40, rue Vignon**
**F-75009 Paris (FR)**

(54) **Dispositif de raccordement d'un tuyau élastiquement déformable à un tube rigide.**

(57) L'invention concerne un dispositif de raccordement d'un tuyau déformable (I4) et d'un tube rigide (22) à surface externe cylindrique lisse, le tube (22) comprenant une saillie radiale (26) sur sa surface extérieure, formant butée de l'extrémité du tuyau (I4) et point d'accrochage d'une bague de serrage (28).

L'invention s'applique notamment au montage des tuyaux élastiquement déformables sur des embouts rigides des boîtes à eau des échangeurs de chaleur pour véhicules automobiles.

FIG.2

## Description

Dispositif de raccordement d'un tuyau élastiquement déformable à un tube rigide.

L'invention concerne un dispositif de raccordement d'un tuyau élastiquement déformable à un tube rigide, tel par exemple qu'un embout d'entrée ou de sortie de liquide d'une boîte à eau d'un échangeur de chaleur, en particulier un radiateur faisant partie d'un circuit de refroidissement d'un moteur de combustion interne de véhicule automobile ou d'une installation de chauffage ou de climatisation de l'habitacle d'un véhicule automobile.

La boîte à eau d'un tel échangeur est en général moulée en une seule pièce en matière plastique avec au moins un embout d'entrée ou de sortie de liquide. L'extrémité libre de cet embout comprend habituellement, sur sa surface externe, un bourrelet en saillie sur lequel est enfilée l'extrémité d'un tuyau élastiquement déformable, par exemple en caoutchouc ou en matière analogue, qui relie cet embout à un circuit de liquide. L'extrémité de ce tuyau est serrée sur l'extrémité de l'embout au moyen d'un collier de serrage de type classique, qui est monté autour de l'extrémité du tuyau et de l'embout en arrière dudit bourrelet pour s'opposer à l'arrachement du tuyau, par exemple à la suite d'une traction ou d'une variation brusque de pression du liquide circulant dans le tuyau.

Toutefois, la formation de ce bourrelet sur la surface externe de l'extrémité libre de l'embout pose des problèmes de moulage. Le moule déterminant la forme extérieure de l'embout et du bourrelet est en deux parties, appliquées l'une sur l'autre suivant un plan de joint qui passe par l'axe de l'embout. Il en résulte, au démoulage, un risque de bavure sur la surface extérieure de l'embout au niveau du plan de joint, cette bavure étant susceptible de provoquer des fuites de liquide lorsque le tuyau est monté sur l'embout et maintenu en place par le collier de serrage. Pour cette raison, il est souvent nécessaire de supprimer cette bavure après moulage de la boîte à eau et de l'embout, ce qui augmente le coût du dispositif. En outre, la présence du bourrelet sur la surface externe de l'extrémité de l'embout oblige à exercer un certain effort au montage du tuyau sur l'embout.

La présente invention a notamment pour but d'éviter ces inconvénients.

Elle a pour objet un dispositif de raccordement d'un tuyau élastiquement déformable à un embout ou tube rigide ne présentant pas de bourrelet externe à son extrémité et permettant cependant d'assurer positivement la fixation de l'extrémité du tuyau sur l'embout ou le tube et de garantir l'étanchéité de ce montage.

L'invention propose donc un dispositif de raccordement d'un tuyau élastiquement déformable à un tube rigide, tel par exemple qu'un embout d'entrée ou de sortie de liquide d'une boîte à eau d'un échangeur de chaleur, l'extrémité du tube sur laquelle doit être enfilée l'extrémité du tuyau étant à surface externe cylindrique lisse, caractérisé en ce que le tube rigide comprend sur sa surface externe et au voisinage de son extrémité au moins une saillie radiale formant une butée sur une face avant de laquelle s'applique l'extrémité du tuyau enfilée sur le tube, le dispositif comprenant également une bague de serrage qui entoure l'extrémité du tuyau enfilée sur le tube et qui comprend, sur sa surface interne, au moins une dent radiale en saillie venant s'appliquer sur la face arrière de la saillie radiale du tube.

Le dispositif selon l'invention permet donc, dans le cas d'une boîte à eau d'un échangeur de chaleur, de former l'embout de cette boîte à eau sans bourrelet externe à son extrémité, ce qui facilite le montage du tuyau sur l'embout et supprime les risques de bavure constatés dans la technique antérieure, car l'embout peut être réalisé dans un moule en une pièce ne comprenant pas de plan de joint. De plus, l'accrochage de la bague de serrage sur une saillie radiale du tube assure positivement le maintien du tuyau sur le tube.

Selon une première forme de réalisation de l'invention, la bague de serrage est fendue parallèlement à son axe et est associée à des moyens de serrage permettant de rapprocher l'une de l'autre ses extrémités, pour le serrage de l'extrémité du tuyau sur l'extrémité du tube.

Ces moyens de serrage peuvent être constitués par un ensemble vis-écrou, la vis étant reçue dans un logement d'une extrémité de la bague tandis que l'écrou est reçu dans un logement de l'autre extrémité de la bague.

Les moyens de serrage peuvent également être constitués par un collier de serrage de type classique entourant extérieurement ladite bague.

Pour garantir l'étanchéité, on prévoit avantageusement que la surface interne de la bague comprend au moins une nervure annulaire en saillie, destinée à comprimer radialement l'extrémité du tuyau enfilée sur l'extrémité du tube.

Selon une autre forme de réalisation de l'invention, la surface intérieure de la bague comprend des ondulations dont les sommets et les fonds sont parallèles à l'axe du tube, cette bague entourant un manchon intermédiaire fendu longitudinalement, dont la surface interne cylindrique s'applique sur la surface externe du tuyau enfilé sur le tube et dont la surface externe présente des ondulations correspondant à celles de la surface interne de la bague, de telle sorte que, quand les sommets des ondulations de la bague sont amenés dans les fonds des ondulations du manchon, ce dernier est desserré, et qu'il est serré quand, par rotation d'une fraction de tour, les sommets des ondulations de la bague sont amenés en appui sur les sommets des ondulations du manchon.

Pour faciliter le serrage, le manchon est immobilisé en rotation sur l'extrémité du tube, au moins pour un sens de rotation de la bague, par exemple au moyen d'un doigt qui est formé à son extrémité située du côté de la saillie radiale du tube et qui vient par rotation en butée sur une face radiale de cette saillie.

Selon encore une autre forme de réalisation de l'invention, l'extrémité du tuyau destinée à être enfilée sur l'extrémité du tube est formée par un embout tubulaire rigide solidaire du tuyau et présentant au moins une gorge annulaire interne dans laquelle est placé un joint annulaire d'étanchéité entourant à étanchéité l'extrémité du tube.

Dans ce cas, la bague précitée est fendue parallèlement à son axe et comprend, à son extrémité coopérant avec la saillie radiale du tube, un rebord annulaire de clipsage sur cette saillie radiale, le clipsage ayant lieu par translation axiale de la bague sur le tube.

L'embout précité prévu à l'extrémité du tuyau se termine par un rebord annulaire externe en saillie, qui vient en butée sur la saillie radiale du tube et sur lequel vient s'accrocher un rebord annulaire interne de l'extrémité de la bague opposée à l'extrémité comportant le rebord de clipsage.

Cette forme de réalisation du dispositif selon l'invention permet une automatisation simple du montage et de la fixation de l'extrémité du tuyau sur le tube.

Dans la description qui suit, faite à titre d'exemple, on se réfère aux dessins annexés, dans lesquels:

- la figure I est une vue schématique en coupe axiale d'un dispositif de raccordement connu de la technique antérieure;

- la figure 2 est une demi-vue en coupe axiale d'un dispositif de raccordement selon l'invention;

- la figure 3 est une vue en plan, avec arrachement partiel, d'une bague de serrage utilisée dans le dispositif de la figure 2;

- la figure 4 est une demi-vue en coupe axiale d'une autre forme de réalisation du dispositif selon l'invention;

- la figure 5 est une vue en coupe axiale d'une autre forme de réalisation du dispositif selon l'invention, la partie supérieure de cette figure représentant le dispositif à l'état serré, et sa partie inférieure le représentant à l'état desserré;

- la figure 6 est une vue en coupe transversale selon la ligne VI-VI de la figure 5;

- la figure 7 est une vue en demi-coupe axiale d'une autre forme de réalisation du dispositif selon l'invention;

- la figure 8 illustre schématiquement les opérations automatiques de montage de ce dispositif;

- la figure 9 illustre une variante de réalisation du dispositif de la figure 7.

On se réfère d'abord à la figure I, représentant schématiquement un dispositif connu de raccordement de l'extrémité d'un tuyau élastiquement déformable, par exemple en caoutchouc, à l'extrémité d'un tube rigide, en particulier d'un embout d'entrée ou de sortie de liquide dans une boîte à eau d'un échangeur de chaleur.

Comme on le voit en figure I, l'embout I0 d'entrée ou de sortie de liquide, qui est formé de moulage avec une boîte à eau non représentée, est de forme générale cylindrique droite et comprend, à son extrémité libre, un bourrelet I2 en saillie sur sa surface externe. La partie d'extrémité I6 du tuyau I4

de caoutchouc ou de matière analogue est enfilée à force sur l'extrémité du tube I0. La présence du bourrelet I2 oblige à exercer un certain effort, le tuyau I4 étant expansé radialement vers l'extérieur au passage sur le bourrelet I2. La partie d'extrémité I6 du tuyau I4 est maintenue en place sur l'extrémité du tube I0 par un collier de serrage I8 d'un type classique, qui comprend en général un ruban métallique entourant la partie d'extrémité I6 du tube I4, et des moyens de serrage ou de contraction radiale de ce ruban, pour comprimer radialement la partie d'extrémité I6 du tuyau sur l'extrémité du tube I0. Comme le collier de serrage I8 est situé en arrière du bourrelet I2, on comprend que le serrage du collier interdit à l'extrémité I6 du tuyau I4 de glisser sur l'extrémité du tube I0 et de s'échapper de ce tube.

Toutefois, comme indiqué plus haut, la formation du bourrelet I2 sur la surface externe de l'extrémité du tube I0 oblige à réaliser ce tube dans un moule en deux parties appliquées l'une sur l'autre selon un plan de joint diamétral qui passe par l'axe 20 du tube I0. Les bavures qui peuvent se former sur la surface externe du tube I0 au niveau de ce plan de joint sont défavorables à l'étanchéité du montage de l'extrémité du tuyau I4 sur le tube I0 et doivent être supprimées.

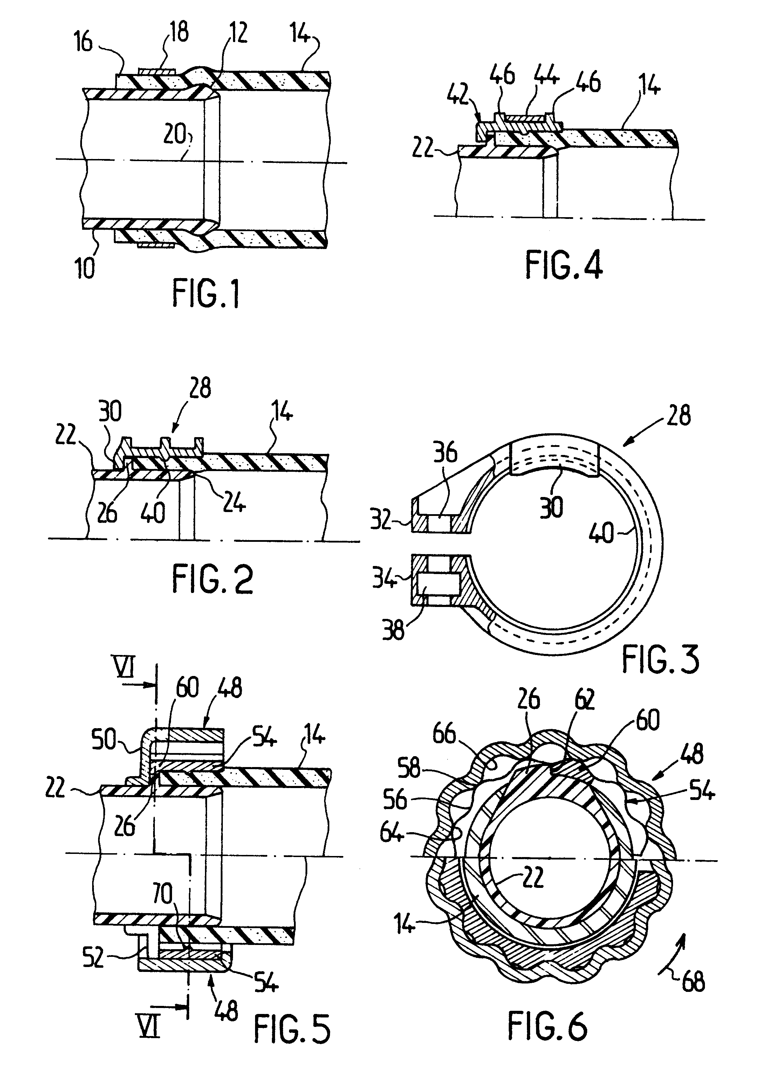

Le dispositif selon l'invention, dont les diverses formes de réalisation sont représentées dans les figures 2 et suivantes, permet d'éviter ces inconvénients.

On se réfère maintenant aux figures 2 et 3, représentant une première forme de réalisation du dispositif selon l'invention.

L'extrémité du tuyau I4 de caoutchouc ou de matière analogue est enfilée sur l'extrémité d'un tube rigide 22, la surface externe de cette extrémité ne comprenant pas de bourrelet et étant donc cylindrique et sensiblement lisse.

Au voisinage de son extrémité libre 24, le tube 22 comprend au moins une saillie radiale 26 sur sa surface externe, cette saillie radiale pouvant être continue et former ainsi une nervure annulaire, ou bien être discontinue ou encore être formée d'une seule dent radiale en saillie par rapport à la surface externe du tube 22. L'extrémité libre du tuyau I4 est enfilée, sans effort particulier, sur l'extrémité cylindrique externe du tube 22, jusqu'à venir en butée sur la face avant de la saillie radiale 26. Une bague de serrage 28 entoure l'extrémité du tuyau I4 enfilée sur l'extrémité du tube 22 et comprend, à son extrémité arrière, au moins une dent radiale 30 en saillie sur sa surface interne, qui vient s'appliquer sur la face arrière de la saillie radiale 26 du tube.

Comme on le voit en figure 3, la bague 28 est fendue parallèlement à son axe et présente donc deux extrémités 32 et 34 voisines l'une de l'autre. Pour le serrage de la bague, l'extrémité 32 comprend par exemple un trou 36 de logement d'une vis et l'extrémité 34 comprend un trou 38 de logement d'un écrou. Le vissage de la vis dans l'écrou assure le rapprochement des extrémités 32 et 34 de la bague et donc la contraction radiale de cette bague. Cette contraction radiale assure elle-même la compression radiale de l'extrémité du tuyau I4 sur le

tube 22.

Pour améliorer l'étanchéité, une nervure radiale 40 peut être formée en saillie sur la surface cylindrique interne de la bague 28.

La forme fendue de la bague 28 facilite son montage, à l'état desserré, sur l'extrémité du tube 22. Comme on le voit en figure 2, le diamètre interne de la bague 28 à l'état serré, est sensiblement égal au diamètre externe de la nervure annulaire 26 formée en saillie sur le tube 22.

Des nervures annulaires de rigidification peuvent également être formées sur la surface externe de la bague 28.

La forme de réalisation représentée en figure 4 diffère de celle des figures 2 et 3 en ce que la bague de serrage 42, maintenant l'extrémité du tuyau I4 sur l'extrémité du tube 22, est un simple anneau fendu dont les extrémités en regard ne comprennent pas de logements 36 et 38 pour une vis et un écrou. Dans ce cas, le serrage de la bague et de l'extrémité du tuyau I4 est assuré par un collier de serrage 44 classique, par exemple tel que celui de la figure I, qui entoure extérieurement la bague 42.

Comme on le voit en figure 4, cette bague peut comprendre, sur sa surface externe, deux nervures annulaires 46 entre lesquelles est disposé le ruban du collier de serrage 44.

Pour le reste, la bague 42 présente les mêmes caracté ristiques que la bague 28 des figures 2 et 3.

On se réfère maintenant aux figures 5 et 6 représentant une autre forme de réalisation du dispositif selon l'invention.

Dans cette forme de réalisation, la bague de serrage 48 est un anneau continu, non fendu, dont le diamètre interne est supérieur au diamètre externe du tuyau I4 dont l'extrémité est enfilée sur l'extrémité du tube 22. Cette bague 48 comprend, à son extrémité arrière, un rebord annulaire 50 orienté radialement vers l'intérieur, destiné à s'appliquer sur la face arrière de la saillie radiale 26 du tube 22. Cette saillie radiale n'est pas formée par une nervure annulaire continue, mais par une ou plusieurs dents radiales espacées angulairement les unes des autres. Pour permettre le montage de la bague 48 sur l'extrémité du tube, le rebord annulaire 50 de cette bague peut être interrompu localement, comme représenté en 52.

La bague 48 entoure un manchon intermédiaire 54 fendu parallèlement à son axe, dont la surface interne cylindrique entoure l'extrémité du tuyau I4, et dont la surface externe présente des ondulations dont les creux 56 et les sommets 58 sont parallèles à l'axe du manchon. A son extrémité arrière, le manchon 54 comprend un doigt 60 parallèle à l'axe du manchon et venant engager une face radiale 62 de la saillie 26 du tube 22, pour interdire la rotation du manchon 54 par rapport au tube 22 dans le sens contraire des aiguilles d'une montre en figure 6.

La surface interne de la bague 48 est également formée avec des ondulations correspondant à celles de la sur face externe du manchon 54, de telle sorte que les sommets 64 et les fonds 66 des ondulations de la bague 48 puissent venir se loger dans les creux 56 et sur les sommets 58 respectivement des ondulations du manchon 54, lorsque le dispositif est desserré comme représenté dans la moitié inférieure des figures 5 et 6.

Par rotation de la bague 48 d'une fraction de tour dans le sens de la flèche 68, on amène les sommets 64 des ondulations de la bague 48 en appui sur les sommets 58 des ondulations du manchon 54, comme représenté dans la moitié supérieure des figures 5 et 6. Il en résulte une contraction radiale du manchon 54, qui se traduit par la compression radiale de l'extrémité du tuyau I4 enfilée sur le tube 22.

Pour améliorer l'étanchéité, la surface interne cylindrique du manchon intermédiaire 54 peut être formée avec une nervure annulaire 70, augmentant la compression radiale de l'extrémité du tuyau I4 sur le tube 22.

Pour faciliter le serrage du dispositif, on peut prévoir que, comme représenté en figure 6, les sommets 58 des ondulations du manchon intermédiaire 54 seront tronqués ou formés avec un léger creux, ce qui facilite le positionnement de la bague 48 dans la position de serrage et empêche un desserrage accidentel.

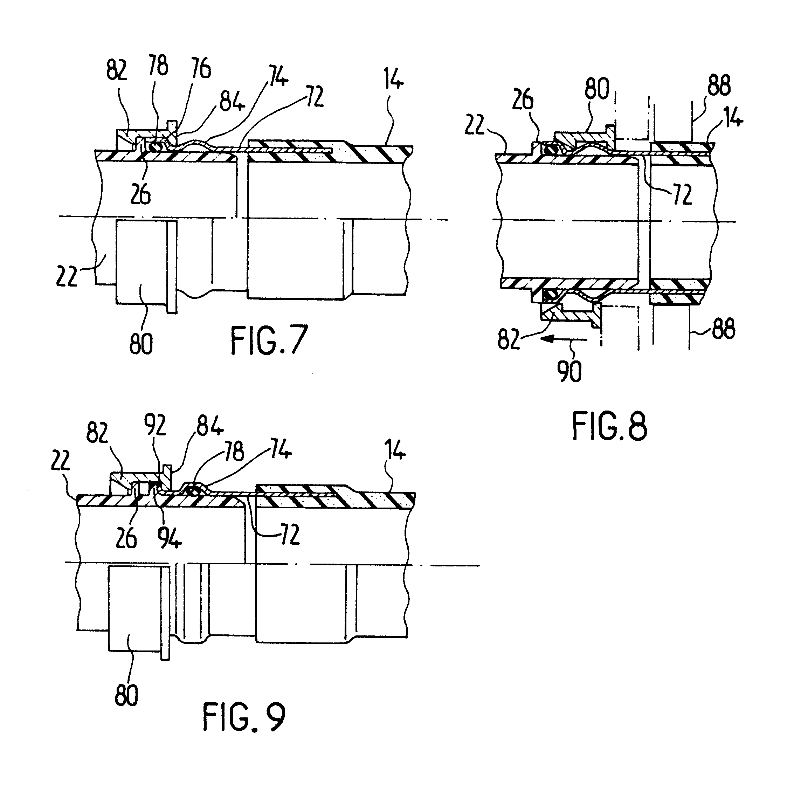

On se réfère maintenant aux figures 7 et 8 représentant une autre forme de réalisation du dispositif selon l'invention.

Dans ces figures, l'extrémité du tuyau I4 élastiquement déformable est solidaire, par exemple par surmoulage, d'un embout tubulaire rigide 72 réalisé en métal. Cet embout pourrait être également réalisé en matière plastique et être fixé par tout moyen approprié à l'extrémité du tuyau I4.

L'embout rigide 72 a un diamètre interne sensiblement égal au diamètre externe du tube 22 et comprend deux ondulations annulaires 74 et 76 respectivement, définissant deux gorges annulaires sur la surface interne de l'embout, et dont l'une est formée dans la partie intermédiaire de l'embout tandis que l'autre est formée à son extrémité libre. Le diamètre extérieur de l'ondulation 76 d'extrémité est sensiblement égal au diamètre externe de la saillie radiale 26 du tube 22, de telle sorte que l'extrémité libre de l'embout 72 peut être appliquée sur la face avant de cette saillie radiale quand l'embout 72 est enfilé sur l'extrémité du tube 22. Un joint torique d'étanchéité 78 entoure étroitement l'extrémité du tube 22 et se trouve immédiatement en avant de la saillie radiale 26, en étant comprimé à l'intérieur de l'ondulation d'extrémité 76 de l'embout 72. Une bague de serrage 80, fendue parallèlement à son axe, entoure l'extrémité de l'embout 76 enfilée sur le tube 22 et comprend, à son extrémité arrière, un rebord annulaire 82 de clipsage en saillie sur sa face interne et destiné à s'appliquer sur la face arrière de la saillie radiale 26 du tube 22. A son extrémité opposée, la bague 80 comprend un autre rebord annulaire 84 en saillie sur sa face interne et destiné à engager le bord avant de l'ondulation 76 d'extrémité de l'embout 72.

Un exemple de montage automatique de ce dispositif est représenté schématiquement en figure 8.

Ce montage est réalisé de la façon suivante :
Initialement, la bague annulaire 80 se trouve autour de la partie médiane de l'embout rigide 72 et recouvre par exemple son ondulation médiane 74. Dans cette position, le rebord arrière 82 de clipsage de cette bague se trouve en avant de l'ondulation d'extrémité 76 de l'embout 72. L'extrémité du tuyau I4 surmoulée sur l'extrémité de l'embout 72 est saisie au moyen d'une pince ou analogue 88, dont seule une partie est représentée en figure 8, et cette pince est déplacée en translation axiale vers l'extrémité du tube 22 pour engager l'embout 72 sur l'extrémité du tube, comme représenté dans la moitié supérieure de la figure 8. Ensuite, la pince 88 est légèrement ouverte et est déplacée vers la bague 80 pour pousser axialement celle-ci dans le sens indiqué par la flèche 90, comme représenté en traits fantômes, jusqu'à ce que le rebord annulaire de clipsage 82 de cette bague ait dépassé la saillie radiale 26 du tube 22. La bague 80 se trouve alors dans la position représentée en figure 7, dans laquelle l'extrémité de l'embout 72 est serrée à étanchéité sur l'extrémité du tube 22.

La forme de réalisation représentée en figure 9 diffère de celle représentée en figure 7 en ce que le joint annulaire d'étanchéité 78 se trouve logé à l'intérieur de l'ondulation intermédiaire 74 de l'embout 72. Dans ce cas, l'ondulation 76 d'extrémité de l'embout 72 peut être remplacée par un rebord annulaire 92 orienté vers l'extérieur. Ce rebord annulaire 92 est en appui sur la saillie radiale 26 du tube 22, lorsque cette saillie radiale a une certaine épaisseur axiale, ou bien sur une autre saillie radiale 94 du tube 22, formée en avant de la saillie radiale 26, comme représenté en figure 9. Le rebord annulaire 92 d'extrémité de l'embout 72 est ainsi retenu entre cette saillie radiale 94 et le rebord annulaire 84 de la bague fendue 80.

Bien entendu, l'invention s'applique non seulement au raccordement des tuyaux sur les embouts des boîtes à eau des échangeurs de chaleur pour véhicules automobiles, mais également au raccordement d'un tuyau souple ou élastiquement déformable quelconque à un tube ou conduit rigide quelconque.

**Revendications**

I. Dispositif de raccordement d'un tuyau élastiquement déformable à un tube rigide, tel par exemple qu'un embout d'entrée ou de sortie de liquide d'une boîte à eau d'un échangeur de chaleur, l'extrémité du tube (22) sur laquelle doit être enfilée l'extrémité du tuyau (I4) étant à surface externe cylindrique sensiblement lisse, caractérisé en ce que le tube rigide (22) comprend, sur sa surface externe au voisinage de son extrémité, au moins une saillie radiale (26) formant une butée sur une face avant de laquelle s'applique l'extrémité du tuyau (I4) enfilée sur le tube (22), le dispositif comprenant également une bague de serrage (28, 42, 48) qui entoure l'extrémité du tuyau (I4) enfilée sur le tube et qui comprend au moins une dent radiale (30, 50) formée en saillie sur sa surface interne et venant s'appliquer sur la face arrière de la saillie radiale (26) du tube (22).

2. Dispositif selon la revendication I, caractérisé en ce que ladite bague de serrage (28, 42) est fendue parallèlement à son axe et est associée à des moyens de serrage permettant de rapprocher l'une de l'autre ses extrémités, pour le serrage de l'extrémité du tuyau (I4) sur l'extrémité du tube (22).

3. Dispositif selon la revendication 2, caractérisé en ce que les deux extrémités en regard de la bague (28) comportent, l'une un logement (38) d'un écrou et l'autre un logement (36) d'une vis destinée à être vissée dans l'écrou pour le serrage de la bague.

4. Dispositif selon la revendication 2, caractérisé en ce que les moyens de serrage comprennent un collier de serrage (44) entourant extérieurement ladite bague (42).

5. Dispositif selon l'une des revendications précédentes, caractérisé en ce que la surface interne de la bague (28, 42) comprend au moins une nervure annulaire (40) en saillie, destinée à comprimer radialement l'extrémité du tuyau (I4) enfilée sur l'extrémité du tube (22).

6. Dispositif selon la revendication I, caractérisé en ce que la surface interne de ladite bague (48) comprend des ondulations dont les sommets (64) et les fonds (66) sont parallèles à l'axe de la bague, celle-ci entourant extérieurement un manchon intermédiaire (54) fendu longitudinalement dont la surface interne cylindrique s'applique sur la surface externe du tuyau (I4) et dont la surface externe présente des ondulations correspondant à celles de la surface interne de la bague (48), de sorte que, quand les sommets (64) des ondulations de la bague (48) se trouvent dans les fonds (56) des ondulations du manchon, celui-ci est desserré, et qu'il est serré quand, par rotation de la bague (48) sur une fraction de tour, les sommets (64) des ondulations de la bague sont en appui sur les sommets (58) des ondulations du manchon.

7. Dispositif selon la revendication 6, caractérisé en ce que ladite bague (48) forme un anneau continu et non fendu.

8. Dispositif selon la revendication 6 ou 7, caractérisé en ce que le manchon (54) est immobilisé en rotation sur l'extrémité du tube (22), au moins pour un sens de rotation de la bague, par exemple au moyen d'un doigt (60) formé à son extrémité située du côté de la saillie radiale (26) du tube, ce doigt (60) venant par rotation en butée sur une face radiale (62) de la saillie (26).

9. Dispositif selon l'une des revendications 6 à 8, caractérisé en ce que la surface interne du manchon (54) comprend une nervure annulaire (70) de compression de l'extrémité du tuyau (I4).

I0. Dispositif selon la revendication I, caractérisé en ce que l'extrémité du tuyau (I4) destinée à être enfilée sur l'extrémité du tube (22) est formée par un embout tubulaire rigide (72) solidaire du tuyau (I4) et présentant au moins une gorge annulaire interne (74, 76) dans laquelle est placé un joint annulaire d'étanchéité (78) entourant étroitement l'extrémité du tube (22).

11. Dispositif selon la revendication 10, caractérisé en ce que ledit embout (72) se termine par une saillie radiale (76, 92) qui vient en butée sur une saillie radiale (26, 94) du tube (22) et sur laquelle vient s'appliquer un rebord annulaire interne (84) formé à l'extrémité de la bague (80) qui est tournée vers le tuyau (14).

12. Dispositif selon la revendication 10 ou 11, caractérisé en ce que la bague de serrage (80) est fendue parallèlement à son axe et comprend, à son extrémité destinée à coopérer avec la saillie radiale (26) du tube (22), un rebord annulaire (82) de clipsage sur cette saillie radiale (26), le clipsage ayant lieu par translation axiale de la bague (80) sur le tube (22).

0219418

FIG.1

FIG.4

FIG.2

FIG.3

FIG.5

FIG.6

0219418

FIG.7

FIG.8

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | GB-A- 484 553 (J.I. OLSSON) <br> * Page 1, lignes 69-102; figures 1-5 * | 1,2,5 | F 16 L 33/00 <br> F 16 L 33/22 <br> F 16 L 37/10 <br> F 16 L 37/12 |
| X | US-A-2 522 684 (W.G. MITCHELL) <br> * Figures 1-4 * | 1-4 | |
| X | US-A-1 505 255 (E.H. GOLD) <br> * Figures 1-5 * | 1-3,5 | |
| A | FR-A- 360 241 (LEVET et al.) <br> * Figures 1-7 * | 1,12 | |
| A | FR-A- 658 225 (H. BOUTILLON) <br> * Figures 1-3 * | 1 | |

DOMAINES TECHNIQUES
RECHERCHES (Int. Cl.4)

F 16 L

Le présent rapport de recherche a été établi pour toutes les revendications

| Lieu de la recherche | Date d'achèvement de la recherche | Examinateur |
|---|---|---|
| LA HAYE | 19-12-1986 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OtB Form 1503 03 82